(19) Europäisches Patentamt
European Patent Office
Office européen des brevets

(11) EP 3 382 733 A1

(12) EUROPEAN PATENT APPLICATION

(43) Date of publication:
**03.10.2018 Bulletin 2018/40**

(21) Application number: **17290047.4**

(22) Date of filing: **31.03.2017**

(51) Int Cl.:
***H01H 9/30*** (2006.01)
***H01B 3/56*** (2006.01)
***H01H 33/64*** (2006.01)
***H02B 13/045*** (2006.01)
***H05B 3/20*** (2006.01)
***H01B 1/12*** (2006.01)
***H01F 27/02*** (2006.01)
***H02B 7/01*** (2006.01)
***H02G 5/06*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **General Electric Technology GmbH**
**5400 Baden (CH)**

(72) Inventor: **Guillon, Emmanuel**
**73106 Aix (FR)**

(74) Representative: **Fischer, Michael Maria et al**
**General Electric Technology GmbH**
**GE Corporate Intellectual Property**
**Brown Boveri Strasse 7**
**5400 Baden (CH)**

(54) **HIGH- AND MEDIUM-VOLTAGE GAS-INSULATED SUBSTATION PRESENTING AN ELECTRICALLY CONDUCTIVE POLYANILINE COATING**

(57) The present invention concerns a medium- or high-voltage gas-insulated substation including a leaktight enclosure in which there are located one or more electrical component(s) and a gaseous medium for ensuring electrical insulation and/or for extinguishing electric arcs that are likely to occur in said enclosure, wherein at least part of the outer surface of said enclosure presents an electrically conductive polyaniline coating. The present invention also concerns a system for avoiding liquefaction of the dielectric gaseous medium in a high- or medium-voltage gas-insulated substation, which comprises the high- or medium-voltage gas-insulated substation as previously defined and a control unit.

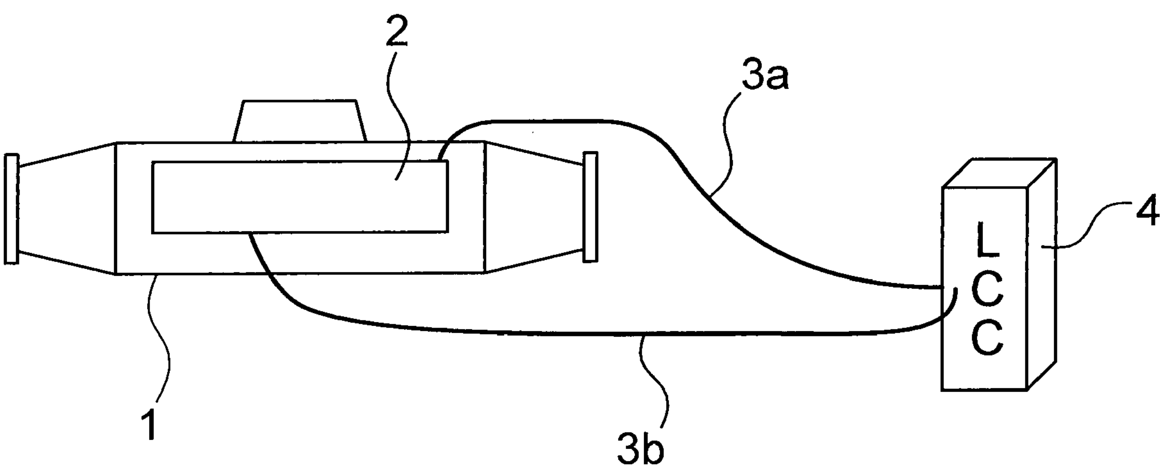


FIGURE 1

EP 3 382 733 A1

## Description

## TECHNICAL FIELD

The invention relates to the field of high- or medium-voltage gas-insulated substations, commonly referred to as Gas-Insulated Substations (GISs). Substations of this type comprise switchgear, in particular busbar disconnectors, circuit-breakers, or grounding switches. In these substations, the electrical active part is arranged in a gas-tight housing which defines an insulating space. The latter is filled with a dielectric gaseous fluid under pressure which performs the functions of the electrical insulation and electric arc extinction.

More particularly the present invention proposes a high- or medium-voltage gas-insulated substation in which the liquefaction of the dielectric gaseous fluid is avoided thanks to a heating coating. This heating coating comprises an inherently conductive polymer which is polyaniline.

The present invention also proposes a system for avoiding liquefaction of dielectric gaseous medium in a high- or medium-voltage gas-insulated substation.

## STATE OF THE PRIOR ART

In equipment for a transmission line carrying high- or medium-voltage electricity such as high- or medium-voltage gas-insulated substations, the functions of the electrical insulation and electric arc extinction are typically performed by a gas that is confined to the inside of the equipment.

Currently, sulfur hexafluoride ($SF_6$) is the gas used most frequently. That gas presents dielectric strength that is relative high, good thermal conductivity and low dielectric losses. It is chemically inert, nontoxic for humans and animals and, after being dissociated by an electric arc, it recombines quickly and almost completely. Nevertheless, because of its high global warning potential, manufacturers have proposed to use other gases or gaseous mixtures as suitable alternatives to $SF_6$.

In use, the insulation gas or the insulation gaseous mixture implemented can be in a two-phase system comprising a liquid and a gaseous phase. This applies to medium-voltage or high-voltage equipment in which having some of the insulation gas or the insulation gaseous mixture in the liquid state does not reduce insulation.

Alternatively, the equipment are medium- or high-voltage equipment in which insulation can be affected by the presence of a liquid phase. In this embodiment, it is desirable for the insulation gas or the insulation gaseous mixture to be exclusively or almost exclusively in the gaseous state across the entire range of utilization temperatures for the equipment.

In other words, it is necessary to avoid the liquefaction of part of the insulation gas or of the insulation gaseous mixture even at the minimum utilization temperatures of the equipment. As a reminder such a minimum utilization temperature can reach -35°C, -40°C, -45°C, and -50°C.

Several strategies have already been proposed to solve such a technical problem.

For example, the International application WO 2014/037566, **[1]**, proposes a hybrid insulation system for medium- or high-voltage equipment. This system implements a gaseous medium comprising heptafluoroisobutyronitrile in a mixture with a neutral gas for use as a gas for electrical insulation and/or for electric arc extinction in medium- or high-voltage equipment, in combination with solid insulation. This application recommends the heptafluoroisobutyronitrile to be present in the mixture at a molar percentage ($M_{he}$) that does not exceed 100% of the molar percentage M so that it does not present a liquefaction phase at the minimum utilization temperature. This molar percentage M is determined by the following formula:

$$M = (P_{he}/P_{mixture}) \times 100$$

in which $P_{mixture}$ represents the total pressure of the mixture at 20°C in the equipment and $P_{he}$ represents the partial pressure, expressed in the same units, that is equivalent at 20°C to the saturated vapor pressure presented by heptafluoroisobutyronitrile as defined above at the minimum utilization temperature of the equipment.

As for the pressure $P_{he}$, it is approximated by the following formula:

$$P_{he} = (SVP_{he} \times 293)/(T_{min} + 273)$$

in which $SVP_{he}$ represents the saturated vapor pressure of heptafluoroisobutyronitrile as defined above at the minimum utilization temperature $T_{min}$ of the equipment, expressed in degrees Celsius.

Nevertheless this solution cannot be used with any insulation gas or any insulation gaseous mixture without affecting the characteristics of the equipment, from the point of view of its insulating and breaking abilities. In addition liquefaction can occur if the temperature to which the equipment is subjected is lower than the standard minimum utilization temperature used for the calculation.

International application WO 2012/080246, **[2]**, describes the use of one or more fluoroketone(s) in a mixture with air as electrical insulation and/or electric arc extinction means having low environmental impact. Because of the high boiling points for the fluids proposed, i.e. 49°C for fluoroketone C6 and 23°C for fluoroketone C5, those fluids are found in the liquid state at the usual minimum pressures and service temperatures for medium- and high-voltage equipment, thus obliging the inventors to add systems for vaporizing the liquid phase or for heating the outside of the equipment so as to maintain the temperature of the equipment above the liquefaction temperature for fluoroketones. Nevertheless that outside vaporizing system and heating system complicate the design of the equipment.

In view of the above, the inventors have therefore generally sought to find an alternative for avoiding the liquefaction of part of the insulation gas or of the insulation gaseous mixture in use without affecting the characteristics of the equipment, from the point of view of its insulating and breaking abilities and without significantly increasing the size of this equipment or the pressure of the gas or the gaseous mixture inside it.

## SUMMARY OF THE INVENTION

These objects and others are achieved by the invention that proposes the use of a particular heating coating to obtain medium- or high-voltage gas-insulated substation in which the insulation gas or the insulation gaseous mixture remains gaseous even at the minimum utilization temperatures of the substation.

More particularly, the present inventors have proposed to use an electrically conductive polyaniline coating to solve the above technical problem. Indeed polyaniline belongs to the inherently conductive polymers (ICPs). Amongst these polymers, polyaniline is of particular industrial and economical importance since the latter has a good conductivity, environmental stability and ease of synthesis. The inventors have thus proposed to use the property of polyaniline concerning the thermal conductivity **[3]**. Indeed when an electric voltage is applied to polyaniline, its temperature increases due to the Joule effect. In other words the electrically conductive polyaniline coating applied to the medium- or high-voltage gas-insulated substation acts as a heating coating.

Implementing such a heating coating is a simpler way to avoid the liquefaction of the dielectric gas medium present in the substation enclosure, when compared with the vaporizing system and heating system disclosed in **[2]**. In the present invention, the control of the heating is based on parameters easily measurable such as the temperature of the environment surrounding the substation. In addition, the coating implemented does not depend on the dielectric gaseous medium present inside the enclosure.

The present invention also concerns a system for avoiding liquefaction of dielectric gaseous medium in a high- or medium-voltage gas-insulated substation, this system comprising such a substation and a control unit.

## BRIEF DESCRIPTION OF THE DRAWINGS

Figure 1 is a schematic representation of a gas-insulated substation such a gas-insulated switchgear according to the present invention i.e. presenting an electrically conductive polyaniline patch.

## DETAILED EXPOSURE OF PARTICULAR EMBODIMENTS

The present invention concerns a medium- or high-voltage gas-insulated substation.

Above and below, the terms "medium voltage" and "high voltage" are used in the conventionally accepted manner, i.e. the term "medium voltage" refers to a voltage that is greater than 1000 volts (V) for AC and 1500 V for DC, but that does not exceed 52,000 V for AC or 75,000 V for DC, whereas the term "high voltage" refers to a voltage that is strictly greater than 52,000 V for AC and than 75,000 V for DC.

More particularly, the present invention concerns a medium- or high-voltage gas-insulated substation including a leaktight enclosure in which there are located one or more electrical component(s) and a gaseous medium for ensuring electrical insulation and/or for extinguishing electric arcs that are likely to occur in said enclosure, wherein at least part of the outer surface of said enclosure presents an electrically conductive polyaniline coating.

The gaseous medium present in the medium- or high-voltage gas-insulated substation according to the present invention can be any dielectric gas or dielectric gaseous mixture typically used for ensuring electrical insulation and/or for extinguishing electric arcs in such substations. The dielectric gas or dielectric gaseous mixture is present in the substation enclosure under pressure. As particular examples of such a gaseous medium, one can cite $SF_6$ alone or in combination with a dilution gas, heptafluoroisobutyronitrile as disclosed in **[1]** and one or more fluoroketone(s) as disclosed in **[2]**.

In the present invention, the terms and expressions "enclosure", "casing", "housing", "leaktight enclosure", "leaktight casing" and "leaktight housing" are equivalent and can be used interchangeably. The medium- or high-voltage gas-insulated substation according to the present invention comprises an enclosure defining a hollow volume and one or more electrical component(s) arranged in said enclosure, with a gaseous medium as the insulating medium. Advantageously, the enclosure of the medium- or high-voltage gas-insulated substation according to the present invention is a metal envelope.

The outer surface of the enclosure corresponds to the enclosure surface in contact with the environment surrounding the enclosure and in particular with the environment surrounding the medium- or high-voltage gas-insulated substation. On the contrary the inner surface of the enclosure corresponds to the enclosure surface in contact with the dielectric gaseous medium ensuring electrical insulation and/or extinguishing electric arcs that are likely to occur in said enclosure.

As a reminder, polyaniline is obtained thanks to the polymerization of the monomer aniline ($C_6H_5$-$NH_2$). The structure of polyaniline is given by the formula (I) below:

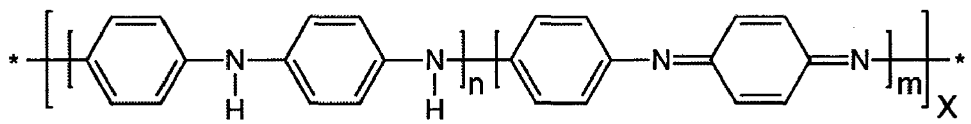

(I)

with $0 \leq n \leq 1$, $0 \leq m \leq 1$, n+m=1 and X=half degree of polymerization.

In the formula (I), the fully reduced state in which n=1 and m=0 is called the "leucoemeraldine" state, while the fully oxidized "pernigraniline" state corresponds to n=0 and m=l. When n=m=0.5, polyaniline is said to be in its "emeraldine" oxidation state also called the emeraldine base (EB).

The leucoemeraldine and the pernigraniline states present a poor conductivity even when doped, while doped emeraldine state has a good conductivity. Indeed, doping the polyaniline generates or eliminates charge carriers such as electrons therein.

As a consequence, the electrically conductive polyaniline implemented in the present invention is advantageously a doped emeraldine state polyaniline.

The expression "electrically conductive polyaniline" as used in the present invention encompasses electrically conductive polyaniline obtained from unsubstituted anilines and/or from substituted anilines, in particular as defined in the patent application US 2008/197326 **[4]**.

The one skilled in the art knowns different protocols to prepare an electrically conductive polyaniline (see, for example, **[3]** and **[4]**). As an example, this polymer can be synthesized by polymerization technique from aniline monomers using a chemical oxidant such as, for example, hydrochloric acid or ammonium persulfate and by doping the polymer thus obtained using well-known acidic or oxidant dopants such as iodine, chlorine, hydrochloric acid or also any dopant as disclosed in the patent application FR 2 880 350 **[5]**. Alternatively, the synthesis can implement an electrochemical oxidation instead of a chemical oxidation.

The coating of electrically conductive polyaniline implemented in the present invention can present a thickness comprised between 10 μm and 30 mm. The thickness will depend on the nature of the coating and/or on the process implemented to apply it on the outer surface of the enclosure.

In a first embodiment, the coating of electrically conductive polyaniline implemented in the present invention is in the form of a film, a resin or a paint.

This coating can be obtained applying onto the outer surface of the substation a coating composition containing the electrically conductive polyaniline and a binder. Advantageously the coating thus obtained presents a polymer matrix containing the electrically conductive polyaniline in which the polymer matrix is formed from the binder. In this coating the polyaniline can be in the form of particles, of fibers such as nanofibers or of mixture of particles and fibers.

Using common solution and melt processing techniques electrically coating compositions containing the electrically conductive polyaniline and a binder can be made.

The binder may be a polymer such as, for example, polypropylene, polyethylene, acrylic polymer, acrylic copolymer, vinyl acetate polymer, vinyl/acrylic copolymer, polystyrene, styrene/acrylic copolymer, polyurethane, polyvinyl chloride, styrene/butadiene polymer, phenol-formaldehyde resin, a thermoplastic elastomer, an unsaturated polyester resin and any mixture thereof. The polymer may be provided in a liquid medium such as a solution polymer, an emulsion polymer or a suspension polymer. The polymer may contain reactive groups which upon formation of a film, crosslink to provide a crosslinked coating. Alternatively, the coating composition may contain a crosslinking agent which reacts with complementary reactive groups of the binder. Such crosslinking agents are well-known to those skilled in the art.

The binder may also be at least one prepolymeric material which is cured to form a polymer matrix. The coating

composition containing the polyaniline and at least one prepolymeric material as the binder is applied onto the outer substrate and then the at least one prepolymeric material is polymerized or is crosslinked to form a polymer matrix. The resulting coating is a polymer matrix that contains the electrically conductive polyaniline.

The electrically conductive polyaniline coating and more particularly the coating composition can be deposited on the outer surface of the medium- or high-voltage substation thanks to different processes.

Among these techniques, methods by centrifugation ("spin coating"), by immersion ("dip coating"), by spraying, by brushing or by rolling may be mentioned.

Such a coating and more particularly the coating composition can be applied on the outer surface of a substation when building it. It can also be applied on already existing substations.

In a second embodiment, the coating of electrically conductive polyaniline implemented in the present invention can be in the form of a tissue or a patch and, more particularly, in the form of an adhesive tissue or an adhesive patch. Such a coating is advantageously a flexible and soft coating that is easily manipulated.

In this embodiment, the coating implemented in the present invention can be multilayer with at least one of these layers comprising electrically conductive polyaniline as already defined.

More particularly, the coating is advantageously a multilayer coating with at least one layer consisting of a carrier substrate onto which is deposited or applied a coating composition as previously defined. This coating can present an adhesive layer thanks to which it is applied and maintained applied to the outer surface of the enclosure.

The carrier substrate is advantageously a flexible plastic film such as for example a film of polyimide, polypropylene, monoaxially oriented polypropylene, polyethylene, polyphenylene sulfide, polyether ether ketone, polyether ketone, polyethylenimine, polysulfone, liquid-crystal polymers, polybutylene terephthalate or polyoxymethylene.

Alternatively, this multilayer coating can also present a web which is advantageously formed by natural fibers, synthetic fibers or combinations thereof onto which is applied or deposited a coating composition as previously defined or an electrically conductive polyaniline. As particular examples of fibers, one can cite the cellulosic or lignocellulosic fibers or Kevlar fibers.

Such a coating can be prepared by mixing the electrically conductive polyaniline or the coating composition with the fibers or by polymerizing and doping the electrically conductive polyaniline onto the surface of the fibers.

It should be noted that in particular embodiments of the present invention, the coating of electrically conductive polyaniline can comprise electrically conductive polyaniline composites, the latter presenting particular interest. Indeed such composites present interesting properties such as properties of electromagnetic shielding. As examples of such composites of interest, one can cite the composites comprising fibers of electrically conductive polyaniline and Kevlar and the composites comprising electrically conductive polyaniline and poly(methyl methacrylate). Araujo *et al*, 2005, **[6]** , discloses a process to prepare poly(methyl methacrylate) (PMMA)/electrically conductive polyaniline nanofibers composite films.

The coating of the electrically conductive polyaniline is applied on at least part of the outer surface of the leaktight enclosure included in the high- or medium-voltage gas-insulated substation according to the present invention.

In a particular embodiment, only a part of the outer surface of the leaktight enclosure is coated or covered by the coating of the electrically conductive polyaniline as previously defined. This part can present a surface representing from 5% to 90% of the total surface of the outer surface of the leaktight enclosure. The only Figure presents this particular embodiment. In the only Figure, the switchgear presents a longitudinal leaktight enclosure (1) and a rectangular coating of electrically conductive polyaniline (2) is applied on the lateral outer surface of this enclosure.

In another embodiment, at least two different parts isolated from one another are coated or covered by the coating of the electrically conductive polyaniline as previously defined. The coating applied to one part can be identical or different to the coating applied to another part. The surface of all these parts can present a surface representing from 5% to 90% of the total surface of the outer surface of the leaktight enclosure.

In yet another embodiment, all the outer surface of the leaktight enclosure is coated or covered by the coating of the electrically conductive polyaniline as previously defined.

The one skilled in the art can select the parts to be covered by the electrically polyaniline coating without undue experiments.

Selecting particular parts of the outer surface of the leaktight enclosure to be covered by the electrically conductive coating can improve the detection of partial discharges. Indeed it is known that the electromagnetic disturbances of the monitoring units of the partial discharge detection systems pass through the unshielded elements of the leaktight enclosure such as, for example, cone slices or portholes. Covering these unshielded elements with the coating of electrically conductive polyaniline and in particular with the coating comprising electrically conductive polyaniline composites as previously defined would limit external disturbances and improve the quality and reliability of the detection.

Advantageously high- or medium-voltage gas-insulated substation according to the present invention is selected from the group consisting of switchgears, busbars, busducts, busbar disconnectors, circuit-breakers, voltage transformers, current transformers, and grounding switches.

The high- or medium-voltage gas-insulated substation according to the present invention can also comprise

means for applying electrical power to the coating of electrically conductive polyaniline.

Any means allowing a material to be subjected to an electrical power or current can be used in the present invention. Advantageously, the means used in the present invention are chosen from among electrical contacts, at least two electrodes and a voltage source.

More particularly the means used in the present invention are at least two electrodes in electric contact with the coating of electrically conductive polyaniline and configured to apply an electrical power to the coating, and at least one voltage source electrically connected to these at least two electrodes. In the only Figure, the references (3a) and (3b) correspond to the electrical contacts electrically connecting the electrodes (not represented) present at the level of the coating (2) and the voltage source (not represented) present inside the LCC for "Layout Command Center" (4).

The electrodes may be in any material commonly used for an electrode. As non-limiting examples, mention can be made of electrodes comprising one or more layers in a metal material chosen from among copper, silver, platinum, cobalt, gold, titanium, palladium, chromium, aluminum and alloys thereof.

The at least two electrodes can be inside the coating of electrically conductive polymer i.e. in the thickness of this coating.

Alternatively, the at least two electrodes can be on the coating or under the coating i.e. between the coating and the outer surface of the enclosure. The only condition to this particular spatial organization is the presence of an electric contact between each electrode and the coating of electrically conductive polyaniline.

Any electric voltage generator known to those skilled in the art can be used in the present invention, as voltage source. The voltage generated by the voltage source used in the device of the invention may be pulsed, alternating or direct. Therefore the current to which the coating covering of the substation of the invention is subjected may be continuous or variable.

The present invention also concerns a system for avoiding liquefaction of dielectric gaseous medium in a high- or medium-voltage gas-insulated substation. This system comprises a high- or medium-voltage gas-insulated substation as previously defined and a control unit.

Advantageously the control unit may comprise at least one unit selected from the group consisting of:

- a measuring unit for measuring a parameter such as the external temperature, i.e. the temperature of the environment surrounding the high- or medium-voltage gas-insulated substation, or the liquid phase level in the dielectric gaseous medium ensuring electrical insulation and/or extinguishing electric arcs in the enclosure of the high- or medium-voltage gas-insulated substation;
- a temperature-detecting unit for detecting the temperature of the electrically conductive polyaniline coating; and
- an electric power controlling unit for controlling the generation of heat at the electrically conductive polyaniline coating according to the parameter measured by the measuring unit and/or the temperature detected by the temperature-detecting unit. According to the measured parameter, the electric power controlling unit can switch on or off the voltage source, for example, if the measured parameter is above or below a predetermined value.

In particular, the control unit may comprise at least two units selected from the above-listed units. As advantageous examples, the control unit can comprise either the measuring unit + the electric power controlling unit as previously defined or the temperature-detecting unit + the electric power controlling unit as previously defined.

More particularly, the control unit may comprise the three above-listed units.

In the only Figure, the control unit is also present in the LCC (4).

**REFERENCES**

[1] International application WO 2014/037566

[2] International application WO 2012/080246

[3] Nath et al, 2013, "Heat conduction in conducting polyaniline nanofibers", Applied Physics Letters, vol. 103, pages 121905.1-121905.5

[4] Patent application US 2008/197326

[5] Patent application FR 2 880 350

[6] Araujo et al, 2005, "Synthesis and morphological characterization of PMMA/polyaniline nanofiber composites", Microelectronics Journal, vol. 36, pages 1055-1057

**Claims**

1. A medium- or high-voltage gas-insulated substation including a leaktight enclosure in which there are located one or more electrical component(s) and a gaseous medium for ensuring electrical insulation and/or for extinguishing electric arcs that are likely to occur in said enclosure, wherein at least part of the outer surface of said enclosure presents an electrically conductive polyaniline coating.

2. The substation according to claim 1, wherein said coating is in the form of a film, a resin or a paint.

3. The substation according to claim 1, wherein said coating is in the form of a tissue or a patch.

4. The substation according to any one of claims 1 to 3, wherein said coating comprises electrically conductive polyaniline composites.

5. The substation according to claim 4, wherein said composites comprises either fibers of electrically conductive polyaniline and Kevlar, or electrically conductive polyaniline and poly(methyl methacrylate).

6. The substation according to any one of claims 1 to 5, wherein said substation is selected from the group consisting of switchgears, busbars, busducts, busbar disconnectors, circuit-breakers, voltage transformers, current transformers, and grounding switches.

7. The substation according to any one of claims 1 to 6, wherein said substation comprises means for applying electrical power to said coating of electrically conductive polyaniline.

8. The substation according to claim 7, wherein said means are at least two electrodes in electric contact with said coating of electrically conductive polyaniline and configured to apply an electrical power to the coating, and at least one voltage source electrically connected to these at least two electrodes.

9. A system for avoiding liquefaction of the dielectric gaseous medium in a high- or medium-voltage gas-insulated substation, which comprises a high- or medium-voltage gas-insulated substation as defined in any one of claims 1 to 8 and a control unit.

10. The system according to claim 9, wherein the control unit comprises at least one unit selected from the group consisting of:

    - a measuring unit for measuring a parameter such as the external temperature, i.e. the temperature of the environment surrounding the high- or medium-voltage gas-insulated substation, or the liquid phase level in the dielectric gaseous medium ensuring electrical insulation and/or extinguishing electric arcs in the enclosure of the high- or medium-voltage gas-insulated substation;
    - a temperature-detecting unit for detecting the temperature of the electrically conductive polyaniline coating; and
    - an electric power controlling unit for controlling the generation of heat at the electrically conductive polyaniline coating according to the parameter measured by the measuring unit and/or the temperature detected by the temperature-detecting unit.

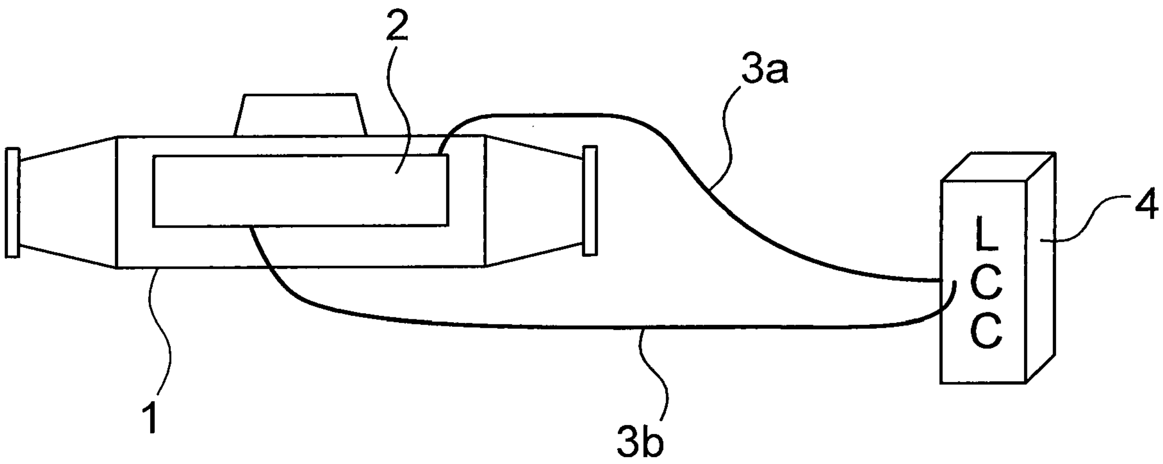


FIGURE 1

Europäisches Patentamt
European Patent Office
Office européen des brevets

# EUROPEAN SEARCH REPORT

Application Number
EP 17 29 0047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/051672 A2 (SANTA FE SCIENCE AND TECHNOLOG [US]) 17 June 2004 (2004-06-17) * abstract; claims 27,33 * * page 2, line 9 - page 4, line 14 * | 1,3-10 | INV. H01H9/30 H01B1/12 H01B3/56 H01F27/02 H01H33/64 H02B7/01 H02B13/045 H02G5/06 H05B3/20 |
| Y,D | WO 2012/080246 A1 (ABB TECHNOLOGY AG [CH]; MANTILLA JAVIER [CH]; CLAESSENS MAX-STEFFEN [C) 21 June 2012 (2012-06-21) * page 41, line 14 - page 43, line 25; figures 3,4 * | 1-10 | |
| Y | KR 2012 0041531 A (PARK MYUNG SUK [KR]; MA GA EUN [KR]; AN HYE JUNG [KR]) 2 May 2012 (2012-05-02) * paragraph [0048] - paragraph [0079]; claims 1-5; figure 1 * | 1,2,4, 6-10 | |
| Y | KR 2003 0010826 A (KIM YOUNG HO [KR]) 6 February 2003 (2003-02-06) * the whole document * | 1,2,4, 6-10 | TECHNICAL FIELDS SEARCHED (IPC) |
| A | US 2015/228375 A1 (KIEFFEL YANNICK [FR] ET AL) 13 August 2015 (2015-08-13) * paragraph [0018]; claims 1-5 * | 1-10 | H01B H01H H01F H02B H02G C09D C08G H05B |
| Y | JP H11 135338 A (TOSHIBA CORP) 21 May 1999 (1999-05-21) * paragraphs [0040] - [0042], [0046], [0047], [0082]; claims 1,20,23; figures 2,4 * | 1-10 | |
| Y | US 5 422 462 A (KISHIMOTO YOSHIO [JP]) 6 June 1995 (1995-06-06) * column 5, line 23 - line 49 * | 1,3-10 | |

The present search report has been drawn up for all claims

3

| Place of search | Date of completion of the search | Examiner |
|---|---|---|
| Munich | 31 August 2017 | Meiners, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 29 0047

This annex lists the patent family members relating to the patent documents cited in the above-mentioned European search report. The members are as contained in the European Patent Office EDP file on
The European Patent Office is in no way liable for these particulars which are merely given for the purpose of information.

31-08-2017

| Patent document cited in search report | Publication date | Patent family member(s) | Publication date |
|---|---|---|---|
| WO 2004051672 A2 | 17-06-2004 | AU 2003293334 A1 | 23-06-2004 |
| | | EP 1579730 A2 | 28-09-2005 |
| | | US 2004144772 A1 | 29-07-2004 |
| | | WO 2004051672 A2 | 17-06-2004 |
| WO 2012080246 A1 | 21-06-2012 | AR 084275 A1 | 02-05-2013 |
| | | AU 2011344232 A1 | 04-07-2013 |
| | | BR 112013014776 A2 | 27-09-2016 |
| | | CA 2821156 A1 | 21-06-2012 |
| | | CN 103415895 A | 27-11-2013 |
| | | DK 2652752 T3 | 11-01-2016 |
| | | EP 2652752 A1 | 23-10-2013 |
| | | ES 2554907 T3 | 28-12-2015 |
| | | HK 1190498 A1 | 08-04-2016 |
| | | JP 6042344 B2 | 14-12-2016 |
| | | JP 2014506376 A | 13-03-2014 |
| | | KR 20130128434 A | 26-11-2013 |
| | | RU 2013132216 A | 20-01-2015 |
| | | TW 201236026 A | 01-09-2012 |
| | | US 2013277334 A1 | 24-10-2013 |
| | | WO 2012080246 A1 | 21-06-2012 |
| KR 20120041531 A | 02-05-2012 | NONE | |
| KR 20030010826 A | 06-02-2003 | NONE | |
| US 2015228375 A1 | 13-08-2015 | CN 104798274 A | 22-07-2015 |
| | | EP 2893602 A1 | 15-07-2015 |
| | | FR 2995462 A1 | 14-03-2014 |
| | | JP 2015534431 A | 26-11-2015 |
| | | KR 20150054976 A | 20-05-2015 |
| | | MX 343730 B | 18-11-2016 |
| | | US 2015228375 A1 | 13-08-2015 |
| | | WO 2014037566 A1 | 13-03-2014 |
| JP H11135338 A | 21-05-1999 | NONE | |
| US 5422462 A | 06-06-1995 | JP 3037525 B2 | 24-04-2000 |
| | | JP H06295780 A | 21-10-1994 |
| | | US 5422462 A | 06-06-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014037566 A
- WO 2012080246 A
- US 2008197326 A
- FR 2880350


### Non-patent literature cited in the description


- **NATH et al.** Heat conduction in conducting polyaniline nanofibers. *Applied Physics Letters,* 2013, vol. 103, 121905.1-121905.5
- **ARAUJO et al.** Synthesis and morphological characterization of PMMA/polyaniline nanofiber composites. *Microelectronics Journal,* 2005, vol. 36, 1055-1057